# EUROPÄISCHE PATENTSCHRIFT

(11) **EP 0 353 659 B1**
(45) Veröffentlichungstag und Bekanntmachung des Hinweises auf die Patenterteilung: **01.12.1993**
(21) Anmeldenummer: 89114002.2
(22) Anmeldetag: 28.07.1989
(51) Int. Cl.: B60C 9/22, B60C 9/20

(54) **Gürtelreifen und Verfahren zu dessen Aufbau**
Radial tyre and method manufacturing same
Pneumatique radial et procédé de fabrication

(30) Priorität: 04.08.1988 DE 3826587
(43) Veröffentlichungstag der Anmeldung: 07.02.1990
(73) Patentinhaber: SP REIFENWERKE GMBH, 63450 Hanau (DE)
(72) Erfinder: Lukosch, Rudolf, D-5560 Wittlich (DE); Winter, Hans-Joachim, D-6460 Gelnhausen 2 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 3 734 700
- FR-A- 2 369 925
- FR-A- 2 454 916
- GB-A- 1 215 820
- GB-A- 2 092 964
- US-A- 3 503 432
- Patent Abstracts of Japan, vol. 10, no 92 (M-468) 2149 9 April 1986, JP-A-60230 836 (Yokohama Gomu K.K.) 16 november 1985

## Beschreibung

Die Erfindung betrifft einen Gürtelreifen gemäß dem Oberbegriff des Patentanspruchs 1 sowie ein verfahren zum Aufbau eines solchen Gürtelreifens.

Die bei Gürtelreifen dieser Art verwendete Bandage, die üblicherweise aus einem unter 0°, d. h. in Umfangsrichtung verlaufenden Nylonmaterial besteht, hat vor allem den Zweck, den bei hohen Laufgeschwindigkeiten im Reifen auftretenden Zentripetalkräften entgegenzuwirken und damit eventuelle Lösetendenzen der Lagen, insbesondere im Bereich der Gürtelkanten, zu verhindern.

Da ein auf einer flachen Aufbautrommel konfektionierter Lagenaufbau bzw. Gürtelverband in der Vulkanisationsform bombiert wird, treten im Gürtelaufbau jedoch auch Dehnungen und Stauchungen auf, wobei der Gürtel die ausgeprägteste Stauchung im Schulterbereich, d. h. im Bereich der größten Beanspruchungen erfährt.

Als Folge dieser im Gürtelverband auftretenden Veränderungen können sich im fertigen Reifen bei bestimmten Geschwindigkeiten Abrollgeräusche in Form von Klopferscheinungen oder Vibrationen ergeben, und außerdem kann ein unregelmäßiger örtlicher Abrieb auftreten.

Es ist bereits bekannt, diesen unerwünschten Erscheinungen durch den Einsatz von bei höheren Temperaturen stark schrumpfendem Nylon entgegenzuwirken, aber diese Vorgehensweise bringt den Nachteil mit sich, daß eine stärkere Flat-Spot-Bildung, d. h. eine ausgeprägte Abplattung während der Stillstands- und Abkühlungsphasen auftritt.

Aus der FR-A-2 369 925 ist ein Fahrzeugreifen bekannt, welcher drei nebeneinanderliegende Polyamidstreifen aufweist, von denen die beiden seitlichen Streifen insbesondere die Reifenflanken verstärken sollen. Die Polyamidstreifen weisen dabei eine derartige Länge auf, daß ihre Enden sich 20 mm überlappen.

Aufgrund der in der Vulkanisationsform auftretenden, vom Zenit zur Schulter sich ausbildenden Dehnungen und Stauchungen im Gürtelverband ergeben sich bei diesem bekannten Fahrzeugreifen mit zunächst gleichmäßig überlappter Bandage unterschiedliche Unterlappungsbreiten im fertigen Reifen, wobei im Kronenbereich eine geringere Überlappung als im Schulterbereich vorliegt.

Problematisch ist, daß bei diesem bekannten Reifen, insbesondere bei hohen oder höchsten Geschwindigkeiten, unerwünschte Abrollgeräusche in Form von Klopferscheinungen sowie Vibrationen und unregelmäßiger örtlicher Abrieb auftreten können.

Der Erfindung liegt die Aufgabe zugrunde, einen Gürtelreifen der eingangs angeführten Art in der Weise auszubilden, daß die vorstehend geschilderten Probleme nicht mehr auftreten und somit ein für hohe und höchste Geschwindigkeiten geeigneter Gürtelreifen zur Verfügung steht, bei dem die Gefahr des Auftretens von Klopfgeräuschen, durch Unwuchten bedingte Vibrationen und eine Flat-Spot-Bildung zumindest weitestgehend und vorzugsweise völlig beseitigt ist.

Diese Aufgabe wird erfindungsgemäß durch die Merkmale des Anspruchs 1 gelöst.

Beim erfindungsgemäßen Fahrzeugreifen werden nebeneinanderliegende Einzelstreifen, welche ohne weiteres unterschiedlich ausgebildet sein können, längenmäßig derart bemessen, daß ein unterschiedliches Schrumpfungs- bzw. Dehnungsverhalten der Einzelstreifen während der späteren Reifenherstellung Berücksichtigung findet und zwar derart, daß im fertigen Reifen eine konstante Überlappungsbreite zwischen allen Einzelstreifen derselben Streifenlage sichergestellt ist. Hierdurch ist es bereits möglich, mit minimalen Überlappungsbreiten zu arbeiten, was sich vorteilhaft auf eine Reduzierung des Reifengewichtes sowie auf die Abrollgeräusche, Vibrationen, unregelmäßigen örtlichen Abrieb und Flat-Spot-Neigung auswirkt.

Diese vorteilhaften Wirkungen werden noch dadurch verstärkt, daß die Überlappungsbereiche der Einzelstreifenenden in Reifenumfangsrichtung gegeneinander versetzt liegen. Hierdurch ist es möglich, die Überlappungsbereiche der nebeneinanderliegenden Einzelstreifen einer Schicht derart über den Reifenumfang zu verteilen, daß Unwuchterscheinungen im Reifen konstruktionsbedingt minimiert bzw. ausgeschaltet werden.

Die Einzelstreifen können in Abhängigkeit von den jeweiligen Anforderungen im Reifen sowohl zumindest im wesentlichen aneinandergrenzend nebeneinander als auch mit gegenseitigem Abstand angeordnet werden, wobei jedoch die Einzelstreifenenden zusammen stets eine Bandagenüberlappungszone in Form eines sich über die Bandagenbreite erstreckenden - durchgehenden oder unterbrochenen - Streifens mit zueinander parallelen Begrenzungslinien bilden.

Nach einer weiteren Ausgestaltung der Erfindung wird die Überlappungsrichtung der Einzelstreifen zumindest zum Teil unterschiedlich gewählt.

Ein weiterer wesentlicher Vorteil der Erfindung, welcher aus dem Einsatz von Einzelstreifen resultiert, besteht darin, daß diese Einzelstreifen und eine oder mehrere gegebenenfalls vorhandene bzw. vorhandenen, sich über die Reifenbreite erstreckende Bandage bzw. Bandagen zumindest zum Teil aus unterschiedlichem Material bestehen können.

Damit ist es möglich, beispielsweise im Schulterbereich gelegene Einzelstreifen aus einem höher schrumpfenden Nylon zu verwenden, während im Kronenbereich übliches Nylonmaterial eingesetzt wird, so daß sich im Schulterbereich Vorteile in bezug auf Hochgeschwindigkeitseigenschaften erzielen lassen, ohne daß im übrigen Reifenbereich die Nachteile des Auftretens von Flat-Spot-Erscheinungen in Kauf genommen werden müssen.

Eine erste Variante eines Verfahrens zum Aufbau eines Gürtelreifens nach der Erfindung zeichnet sich dadurch aus, daß in einer ersten Stufe die sich kreuzenden Gürtellagen, insbesondere Stahlgürtellagen, auf eine zylindrische Aufbautrommel aufgebracht werden und nach einer Konsolidierung eine dem Verlauf der zugehörigen Formkontur entsprechende Bombage vorgenommen wird, worauf dann die Einzelstreifen der Bandage oder Bandagen aufgebracht werden. In diesem Falle besitzen die Einzelstreifen in Abhängigkeit von ihrer Positionierung unterschiedliche Länge, so daß die geforderte gleiche Überlappungsbreite aller Einzelstreifen durch entsprechende Bemessung erzielt wird.

Nach einer zweiten Ausführungsvariante erfolgt der Aufbau eines Gürtelreifens nach der Erfindung in der Weise, daß in einer ersten Stufe die sich kreuzenden Gürtellagen, insbesondere Stahlgürtellagen, auf eine zylindrische Aufbautrommel aufgebracht werden, daß dann der oder die dem Kronenbereich zugeordneten Einzelstreifen auf dem Gürtelbereich angeordnet und dann eine dem Verlauf der zugehörigen Formkontur entsprechende Bombage vorgenommen wird, und daß erst dann die den Schulterbereichen zugeordneten Einzelstreifen der Bandage oder Bandagen aufgebracht werden.

Durch diese Vorgehensweise läßt sich eine weitere Optimierung erzielen, die dazu führt, daß Winkelverzerrungen vermieden und im Gürtel- und im Laufflächenbereich konstantere Abmessungen erzielt werden und sich damit eine Verbesserung der Reifen-Uniformity ergibt.

Weitere besonders vorteilhafte Ausgestaltungen der Erfindung sind in Unteransprüchen angegeben.

Die Erfindung wird nachfolgend unter Bezugnahme auf die Zeichnung beispielsweise erläutert. In der Zeichnung zeigt:
- Fig. 1: eine schematische Querschnittsdarstellung eines Gürtelreifens nach der Erfindung,
- Fig. 2: eine schematische Draufsicht einer herkömmlichen 0°-Bandage zum Zeitpunkt des Aufbringens auf den Gürtel,
- Fig. 3: die Bandage nach Fig. 2 im fertigen Reifen,
- Fig. 4: eine der Fig. 2 entsprechende Darstellung einer erfindungsgemäßen Bandage,
- Fig. 5: eine weitere Ausgestaltung einer erfindungsgemäßen Bandagenanordnung nach erfolgter Aufbringung auf den Gürtel,
- Fig. 6: die Bandagenanordnung nach Fig. 5 im fertigen Reifen,
- Fig. 7: eine weitere Ausführungsvariante einer Bandagenanordnung nach der Erfindung, und

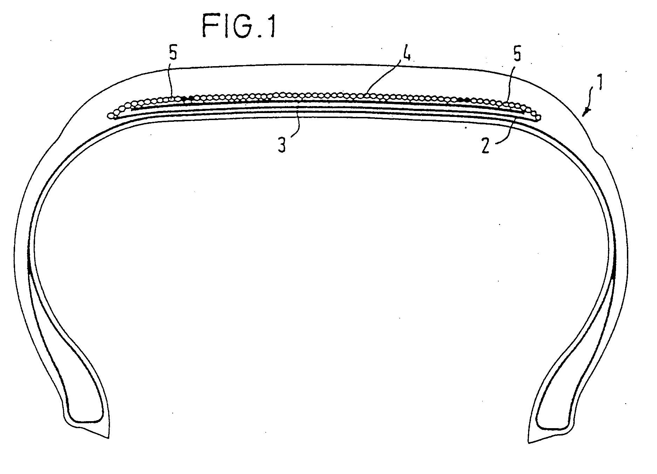

Fig. 1 zeigt einen Gürtelreifen 1 mit einer aus zwei sich kreuzenden Lagen 2, 3 bestehenden Gürtelanordnung und einer diese Gürtelanordnung umschließenden 0°-Bandage, insbesondere Nylon-Bandage, welche aus einem den Mittelbereich überdeckenden Streifen 4 und zwei den Bereich der Gürtelkanten überdeckenden Streifen 5 besteht.

Anstelle einer einlagigen Ausbildung der Streifenbandagen kann auch eine zwei- oder mehrlagige Anordnung vorgesehen sein, und insbesondere ist es dabei möglich, für die verschiedenen Streifen 4, 5 unterschiedliche Materialien zu verwenden, um den besonderen Anforderungen im Reifenmittelbereich und im Gürtelkantenbereich Rechnung zu tragen.

Während bei herkömmlichen, die Gürtelanordnung umschließenden Bandagen eine einteilige, sich über die gesamte Gürtelbreite erstreckende Bandage verwendet wurde, ist die Bandage gemäß der Erfindung - über die Reifenbreite betrachtet - mehrteilig ausgebildet.

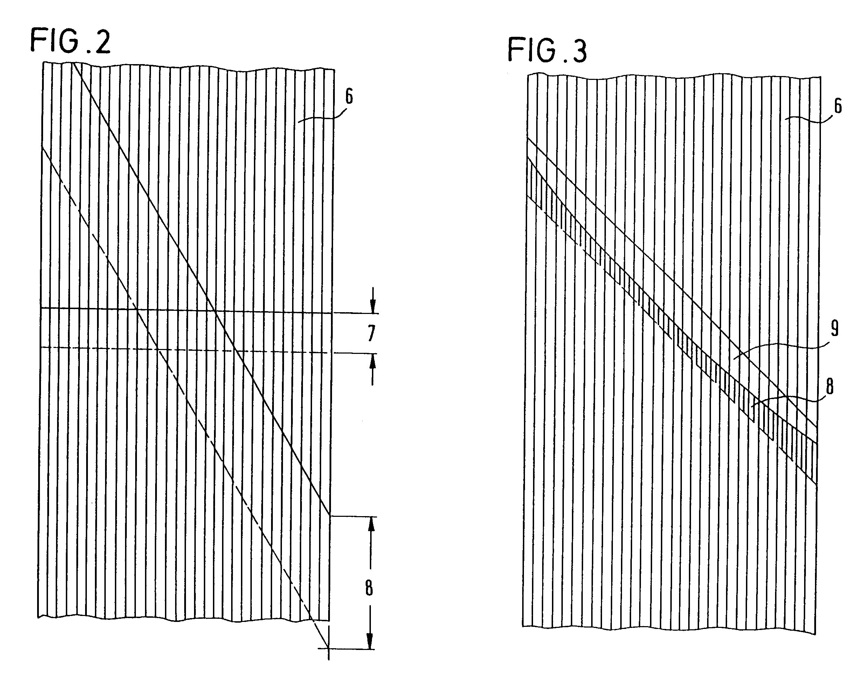

Fig. 2 zeigt eine herkömmliche, einteilige Bandage 6, welche in der Regel unter einem Winkel von 90^{o} bis 30^{o} abgelängt und je nach Schrumpfverhalten in unterschiedlicher Breite, beispielsweise im Bereich von 10 mm bis 35 mm, überlappt wird, so daß sich ein in Querrichtung verlaufender Überlappungsbereich 7 oder ein schräg verlaufender Überlappungsbereich 8 ergibt.

Da die Formkontur sich aus verschiedenen Radien zusammensetzt, der Gürtelverband dagegen üblicherweise flach aufgebaut wird, erfährt der Gürtelverband in der Vulkanisationsform, vom Zenith zur Schulter gehend, Dehnungen und Stauchungen, wobei die größten Stauchungen im Schulterbereich des Gürtels auftreten, d.h. im Bereich der größten Beanspruchungen.

Fig. 3 zeigt die Bandage 6 nach Fig. 2 im fertigen Reifen, d.h. nach der zu Dehnungen und Stauchungen im Gürtelverband führenden Vulkanisation.
Als Folge dieser Effekte ergibt sich eine Veränderung des ursprünglich gleich breiten Überlappungsbereichs 8 in der Weise, daß eine Begrenzungskante dieses Bereichs kreisbogenförmig verläuft und somit ein neuer Überlappungsbereich 9 entsteht, der im Bereich der Reifenmitte eine geringe Breite besitzt und zu den Reifenschultern hin zunimmt.

Um sicherzustellen, daß im Bereich der Reifenmitte im fertigen Reifen stets noch eine Überlappung gegeben ist und keine offene Stelle auftritt, muß die ursprüngliche Überlappung relativ groß gewählt werden.

Die über die Reifenbreite betrachtet ungleichförmige Überlappung und insbesondere das Auftreten einer jeweils breiten Überlappung im Schulterbereich führt insbesondere bei verschiedenen Geschwindigkeiten zu Klopferscheinungen, die den Komfort des Reifens negativ beeinflussen.

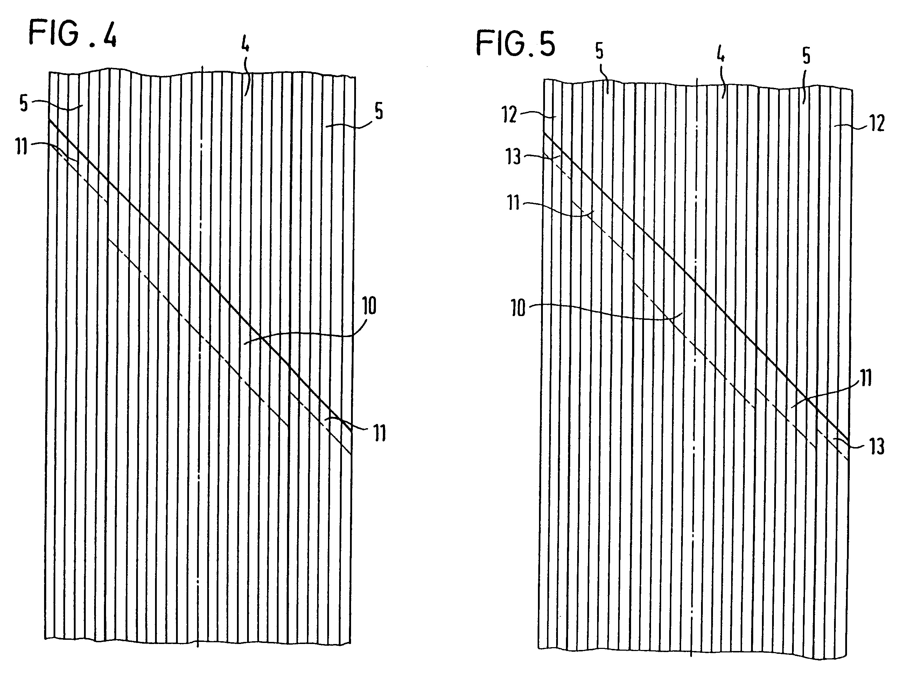

Fig. 4 zeigt eine Bandagenanordnung nach der Erfindung, welche es gestattet, die vorstehend geschilderten Probleme zu beseitigen.

Diese Bandage besteht aus einem mittleren Streifen 4 und zwei den Gürtelkanten zugeordneten seitlichen Bandagenstreifen 5, die gemäß dieser Ausführungsform vorzugsweise direkt aneinandergrenzen.

Durch die Aufteilung der Bandage in einzelne Streifen und die Wahl unterschiedlicher Längen bzw. Anlegemaße gelingt es, eine Anpassung an die von der jeweiligen Formkontur herrührenden Dehnungsverhältnisse zu erreichen. Durch Vorgabe unterschiedlich breiter Überlappungsbereiche 10, 11 beim Anlegen der Bandagenstreifen wird gewährleistet, daß sich im fertigen Reifen eine über die Reifenbreite betrachtet gleichmäßige Überlappungsbreite ergibt.

Fig. 5 zeigt eine Variante einer Bandage, die zusätzlich zu den drei in Fig. 4 gezeigten Streifen weitere Bandagenstreifen 12 aufweist, womit gezeigt ist, daß sich die Anzahl der zu verwendenden Streifen insbesondere nach der Krümmung der Laufflächenkontur richtet, und zwar unter Berücksichtigung der Gesamtbreite des jeweiligen Gürtels. In diesem Falle werden drei unterschiedliche Überlappungsbreiten 10, 11, 13 zwischen den Enden der jeweiligen Bandagenstreifen 4, 5, 12 vorgegeben, wobei die Überlappungsbreite von der Reifenmitte nach außen abnimmt.

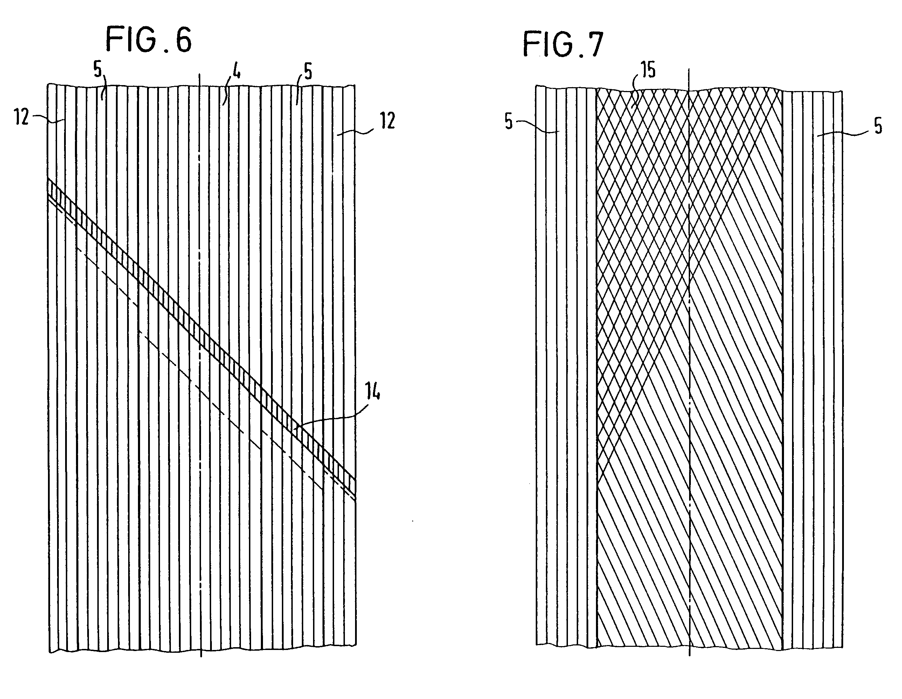

Fig. 6 zeigt die Bandagenanordnung nach Fig. 5 im fertigen Reifen, wobei aus den noch strichliert angedeuteten ursprünglichen Überlappungsbreiten eine einheitliche Überlappung 14 konstanter Breite entstanden ist.

In der Praxis läßt sich das Bandagenkonzept nach der Erfindung ohne Schwierigkeiten realisieren, da nach dem Anlegen der Streifen mit unterschiedlichen Anlegeabstufungen der ein- oder zweimalige Wickelvorgang erfolgen kann und alle Streifen in einem Arbeitsgang unter einem Winkel von 90° bis 10° abgelängt werden können.

Fig. 7 zeigt eine Ausführungsvariante einer Bandagenanordnung, bei der den Gürtelkantenbereichen 0°-Bandagenstreifen 5 zugeordnet sind, während im Kronenbereich ein sich kreuzender Verband 15 oder auch eine Bandage mit unter einem Winkel zur Reifenmittenebene verlaufenden Fäden Verwendung finden kann.

Diese Anordnungen gestatten es, insbesondere in Verbindung mit der Auswahl der jeweils bestgeeigneten Materialien sowohl die Hochgeschwindigkeitseigenschaften eines Reifens zu verbessern all auch die Flat-Spot-Gefahr zu beseitigen, so daß der Fahrkomfort und die Handlingseigenschaften vorteilhaft beeinflußt werden.

## Patentansprüche

1. Gürtelreifen (1) mit wenigstens einer in Reifenumfangsrichtung verlaufenden, eine Gürtelanordnung, die insbesondere aus sich kreuzenden Stahlcordlagen (2, 3) besteht, zumindest bereichsweise umschließenden, an ihren Enden überlappten Bandage, die aus wenigstens drei nebeneinander angeordneten, zusammen zumindest teilweise die Gürtelanordnung überdeckenden Einzelstreifen (4, 5, 12, 15) besteht,
dadurch **gekennzeichnet,**
daß die Länge der auf die Gürtelanordnung (2, 3) aufgebrachten Einzelstreifen (4, 5, 12, 15) zumindest zum Teil unterschiedlich ist, wobei der Längenunterschied derart bemessen ist, daß die Überlappungsbreite der Einzelstreifenenden im fertigen Reifen zumindest im wesentlichen gleich ist, und daß die Überlappungsbereiche (10, 11, 13) der Einzelstreifenenden in Reifenumfangsrichtung gegeneinander versetzt sind und insbesondere einander zumindest zum Teil diametral gegenüberliegen.

2. Gürtelreifen nach Anspruch 1,
dadurch **gekennzeichnet,**
daß die Einzelstreifen (4, 5, 12, 15) zusammen eine Bandagenüberlappungszone in Form eines sich über die Bandagenbreite erstreckenden, durchgehenden oder unterbrochenen Streifens (14) mit zueinander parallelen Begrenzungslinien bilden.

3. Gürtelreifen nach Anspruch 1 oder 2,
dadurch **gekennzeichnet,**
daß die einander diametral gegenüberliegenden Überlappungsbereiche der Einzelstreifenenden unterschiedlich groß sind, wobei jedoch die Summe der überlappten Flächen der sich jeweils gegenüberliegenden Überlappungsbereiche zumindest im wesentlichen gleich ist.

4. Gürtelreifen nach einem der vorhergehenden Ansprüche,
dadurch **gekennzeichnet,**
daß die Überlappungsbereiche von übereinander gelegenen Einzelstreifen gegeneinander versetzt und insbesondere gleichmäßig über den Reifenumfang verteilt sind und/oder die Überlappungsrichtung der Einzelstreifen zumindest zum Teil unterschiedlich ist und/oder die Anzahl der die Bandage bildenden Einzelstreifen mit zunehmender Reifenbreite und/oder Krümmung der Laufflächenkontur erhöht wird.

5. Gürtelreifen nach einem der vorhergehenden Ansprüche,
dadurch **gekennzeichnet,**
daß alle Einzelstreifen (4, 5, 12, 15) jeweils unter einem Winkel von 90° bis 10° bezüglich der Umfangsmittenebene abgelängt sind und insbesondere zumindest zum Teil aus unterschiedlichem Material bestehen.

6. Gürtelreifen nach einem der vorhergehenden Ansprüche,
dadurch **gekennzeichnet,**
daß die Einzelstreifen (4, 5, 12, 15) aus unterschiedlichen Nylonmaterialien, insbesondere zumindest zum Teil aus schrumpfendem Nylonmaterial und vorzugsweise zumindest zum Teil aus unterschiedlich schrumpfendem Nylonmaterial bestehen.

7. Gürtelreifen nach einem der vorhergehenden Ansprüche,
dadurch **gekennzeichnet,**
daß die im Schulterbereich gelegenen Einzelstreifen (5, 12) aus einem höher schrumpfenden Nylon bestehen.

8. Gürtelreifen nach einem der vorhergehenden Ansprüche,
dadurch **gekennzeichnet,**
daß in den Schulterbereichen Einzelstreifen (5) aus Nylon unter 0° und dazwischen im Kronenbereich Einzelstreifen unter einem Winkel von insbesondere 10° bis 80° als Einfachwickel oder als sich kreuzender Verband (5) angeordnet sind.

9. Gürtelreifen nach einem der vorhergehenden Ansprüche,
dadurch **gekennzeichnet,**
daß die Einzelstreifen (4, 5, 12, 15) aus einem Verstärkungsmaterial, insbesondere aus Nylon oder einer anderen Textil-, Glas- oder Stahlfaser, bzw. einem entsprechenden Band bestehen.

10. Gürtelreifen nach einem der vorhergehenden Ansprüche,
dadurch **gekennzeichnet,**
daß in den Schulterbereichen und/oder im Kronenbereich Einzelstreifen aus gleichem Material in Form von Einzellagen oder durchgehenden Mehrfachlagen übereinander angeordnet sind.

11. Gürtelreifen nach einem der Ansprüche 1 bis 9,
dadurch **gekennzeichnet,**
daß in den Schulterbereichen und/oder im Kronenbereich Einzelstreifen aus zumindest zum Teil unterschiedlichem Material in Form von Einzellagen oder durchgehenden Mehrfachlagen übereinander angeordnet sind.

12. Gürtelreifen nach einem der vorhergehenden Ansprüche,
dadurch **gekennzeichnet,**
daß die Einzelstreifen mit zumindest einer sich über die Gürtelbreite erstreckenden Komplettbandage kombiniert sind und für die Einzelstreifen und die Komplettbandage unterschiedliches Material verwendet ist.

13. Gürtelreifen nach einem der vorhergehenden Ansprüche,
dadurch **gekennzeichnet,**
daß zwischen den Einzelstreifen im Kronenbereich und den Einzelstreifen im Schulterbereich ein streifenfreier Bereich vorgebbarer Breite vorgesehen ist.

14. Verfahren zum Aufbau eines Gürtelreifens nach einem der vorhergehenden Ansprüche
dadurch **gekennzeichnet,**
daß in einer ersten Stufe die sich kreuzenden Gürtellagen, insbesondere Stahlgürtellagen, auf eine zylindrische Aufbautrommel aufgebracht werden und nach einer Konsolidierung eine dem Verlauf der zugehörigen Formkontur entsprechende Bombage vorgenommen wird, und daß dann die Einzelstreifen der Bandage oder Bandagen aufgebracht werden.

15. Verfahren zum Aufbau eines Gürtelreifens nach einem der Ansprüche 1 bis 13,
dadurch **gekennzeichnet,**
daß in einer ersten Stufe die sich kreuzenden Gürtellagen, insbesondere Stahlgürtellagen, auf eine zylindrische Aufbautrommel aufgebracht werden, daß dann der oder die dem Kronenbereich zugeordneten Einzelstreifen auf dem Gürtelbereich angeordnet und dann eine dem Verlauf der zugehörigen Formkontur entsprechende Bombage vorgenommen wird, und daß erst dann die den Schulterbereichen zugeordneten Einzelstreifen der Bandage oder Bandangen aufgebracht werden.

## Claims

1. Radial tyre (1) having at least one band which extends in the circumferential direction of the tyre, which surrounds at least regionally a breaker arrangement consisting in particular of crossed steel cord plies (2, 3) and which is overlapped at its ends, the band consisting of at least three individual strips (4, 5, 12, 15) arranged alongside one another and together covering at least partially the breaker arrangement, **characterized in that** the length of the individual strips (4, 5, 12, 15) disposed on the breaker arrangement (2, 3) is different, at least in part, the length difference being dimensioned such that the width of overlap of the individual strip ends is at least substantially the same in the finished tyre, and in that the overlapping regions (10, 11, 13) of the individual strip ends are displaced relative to one another in the circumferential direction of the tyre and in particular are, at least in part, disposed diametrically opposite to one another.

2. Radial tyre in accordance with claim 1,
characterized in that the individual strips (4, 5, 12, 15) together form a band overlapping zone in the form of a continuous or interrupted strip (14) which extends over the width of the band and has mutually parallel boundary lines.

3. Radial tyre in accordance with claim 1 or 2,
characterized in that the diametrically oppositely disposed overlapping regions of the individual strip ends are of differing size, however with the sum of the overlapped areas of the respective oppositely disposed overlapping regions being at least substantially equal.

4. Radial tyre in accordance with one of the preceding claims, characterized in that the overlapping regions of individual strips disposed above one another are displaced relative to one another and are, in particular, uniformly distributed over the circumference of the tyre, and/or the direction of overlap of the individual strips is, at least partly different and/or the number of individual strips forming the band is increased with increasing tyre width and/or curvature of the tread contour.

5. Radial tyre in accordance with one of the preceding claims, characterized in that all individual strips (4, 5, 12, 15) are respectively cut to length at an angle of 90° to 10° relative to the central peripheral plane, and, in particular, consist at least in part of different material.

6. Radial tyre in accordance with one of the preceding claims, characterized in that the individual strips (4, 5, 12, 15) consist of different nylon materials, and in particular consist at least in part of shrinking nylon material, and preferably at least in part of differentially shrinking nylon material.

7. Radial tyre in accordance with one of the preceding claims, characterized in that the individual strips (5 ,12) disposed in the shoulder region consist of a more highly shrinking nylon.

8. Radial tyre in accordance with one of the preceding claims, characterized in that individual strips (5) of nylon are arranged at 0° degrees in the shoulder regions and in that individual strips are arranged therebetween, in the crown region, at an angle of in particular 10 to 80° as a single coil or as a crossed assembly (5).

9. Radial tyre in accordance with one of the preceding claims, characterized in that the individual strips (4, 5, 12, 15 ) comprise a reinforcement material, in particular of nylon or of another textile fibre, glass fibre or steel fibre, or of a corresponding tape.

10. Radial tyre in accordance with one of the preceding claims, characterized in that individual strips of the same material are arranged above one another in the shoulder regions and/or in the crown region in the form of individual plies or continuous multiple plies.

11. Radial tyre in accordance with one of the preceding claims, characterized in that individual strips of at least partially differing material are arranged above one another in the shoulder regions and/or in the crown region in the form of individual plies or continuous multiple plies.

12. Radial tyre in accordance with one of the preceding claims, characterized in that the individual strips are combined with at least one complete band extending over the breaker width, with different materials being used for the individual strips and for the complete band.

13. Radial tyre in accordance with one of the preceding claims, characterized in that a strip free region of predeterminable width is provided between the individual strips in the crown region and the individual strips in the shoulder region.

14. A method of building a radial tyre in accordance with one of the preceding claims,
characterized in that, in a first stage, the crossing breaker plies, in particular steel breaker plies are applied to a cylindrical building drum and, after consolidation, shaping is effected in correspondence with the course of the associated mould contour; and in that the individual strips of the band or bands are then applied.

15. Method of building a radial tyre in accordance with one of the claims 1 to 13,
characterized in that, in a first stage, the crossing breaker plies, in particular steel breaker plies are applied to a cylindrical building drum; in that the individual strip or strips associated with the crown region are then arranged on the breaker region and shaping is then effected in correspondence with the course of the associated mould contour; and in that the individual strips of the band or bands associated with the shoulder regions are only then applied.

## Revendications

1. Pneumatique à carcasse radiale (1) comportant au minimum un bandage recouvert à ses extrémités, allant en direction périphérique du pneumatique, entourant sectoriellement au moins une structure de carcasse, laquelle se compose notamment de couches de cordes d'acier (2,3) se croisant, lequel bandage est constitué d'au moins trois bandes individuelles (4,5,12,15) placées les unes à côté des autres, recouvrant ensemble, partiellement au moins, la structure de carcasse, **caractérisé** en ce que
la longueur des bandes individuelles (4,5,12,15) mises en place sur la structure de carcasse (2,3) est, en partie du moins, différente, la différence de longueur étant mesurée de sorte que la largeur de recouvrement des extrémités des bandes individuelles soit, pour l'essentiel du moins, la même une fois le pneumatique achevé et en ce que les secteurs de recouvrement (10,11,13) des extrémités des bandes individuelles sont décalés les uns par rapport aux autres en direction périphérique du pneumatique et en particulier se font face mutuellement, en partie du moins, diamétralement.

2. Pneumatique à carcasse radiale selon la revendication 1,
**caractérisé** en ce que
les bandes individuelles (4,5,12,15) constituent ensemble une zone de recouvrement de bandage, sous forme d'une bande continue ou ininterrompue (14) s'étendant sur la largeur du bandage et comportant des lignes de délimitation parallèles entre elles.

3. Pneumatique à carcasse radiale selon la revendication 1 ou 2,
**caractérisé** en ce que,
s'agissant des extrémités des bandes individuelles, les secteurs de recouvrement se faisant face mutuellement diamétralement sont de grandeurs différentes, la somme des surfaces recouvertes des secteurs de recouvrement se faisant respectivement face étant cependant, pour l'essentiel du moins, la même.

4. Pneumatique à carcasse radiale selon l'une des revendications précédentes,
**caractérisé** en ce que
les secteurs de recouvrement des bandes individuelles placées l'une au-dessus de l'autre sont décalés les uns par rapport aux autres et sont notamment répartis de manière homogène sur le pourtour du pneumatique et/ou que la direction de recouvrement des bandes individuelles est, en partie du moins, différente et/ou que le nombre des bandes individuelles constituant le bandage augmente avec la largeur du pneumatique et/ou la courbure de la bande d'usure.

5. Pneumatique à carcasse radiale selon l'une des revendications précédentes,
**caractérisé** en ce que
toutes les bandes individuelles (4,5,12,15) sont respectivement mises à longueur sous un angle allant de 90 à 10° par rapport au plan médian du périmètre et sont notamment, partiellement au moins, en matériau différent.

6. Pneumatique à carcasse radiale selon l'une des revendications précédentes,
**caractérisé** en ce que
les bandes individuelles (4,5,12,15) sont en différents nylons, en particulier, en partie du moins, en nylon à retrait et de préférence, au moins partiellement, en nylon à retrait différent.

7. Pneumatique à carcasse radiale selon l'une des revendications précédentes,
**caractérisé** en ce que
les bandes individuelles (5,12) placées dans le secteur de l'épaulement sont en nylon à retrait supérieur.

8. Pneumatique à carcasse radiale selon l'une des revendications précédentes,
**caractérisé** en ce que,
dans les secteurs d'épaulement, des barres individuelles (5) en nylon, sont placées sous un angle 0° et qu'entre, dans le secteur de la couronne, des bandes individuelles, en enroulement simple ou en assemblage croisé (5), sont placées sous un angle de 10 à 80° notamment.

9. Pneumatique à carcasse radiale selon l'une des revendications précédentes,
**caractérisé** en ce que
les bandes individuelles (4,5,12,15) sont en matériau renforcé, en particulier en nylon ou en une autre fibre de textile, de verre ou d'acier ou en une bande correspondante.

10. Pneumatique à carcasse radiale selon l'une des revendications précédentes,
**caractérisé** en ce que
dans les secteurs d'épaulement et/ou dans le secteur de la couronne, des bandes individuelles de même matériau sont mises en place sous forme de couches uniques ou de couches multiples continues, les unes au-dessus des autres.

11. Pneumatique à carcasse radiale selon l'une des revendications 1 à 9,
**caractérisé** en ce que,
dans les secteurs d'épaulement et/ou dans le secteur de la couronne, des bandes individuelles de matériau, partiellement au moins, diffèrent sont placées les unes au-dessus des autres sous forme de couches uniques ou de couches multiples continues.

12. Pneumatique à carcasse radiale selon l'une des revendications précédentes,
**caractérisé** en ce que
les bandes individuelles sont combinées avec au moins un bandage complet s'étendant sur la largeur du pneumatique et que l'on utilise un matériau différent pour les bandes individuelles et pour le bandage complet.

13. Pneumatique à carcasse radiale selon l'une des revendications précédentes,
**caractérisé** en ce que,
entre les bandes individuelles dans le secteur de la couronne et entre les bandes individuelles dans le secteur des épaulements, il est prévu une zone sans bande, dont on peut prédéfinir la largeur.

14. Procédé pour la fabrication d'un pneumatique à carcasse radiale selon l'une des revendications précédentes,
**caractérisé** en ce que,
dans un premier temps, les couches de carcasse, couches en acier notamment, qui se croisent, sont placées sur un tambour cylindrique de montage et qu'après une consolidation, un bombage correspondant au tracé du contour de moule associé est entrepris et en ce qu'ensuite les bandes individuelles du bandage ou des bandages sont mises en place.

15. Procédé pour la fabrication d'un pneumatique à carcasse radiale selon l'une des revendications 1 à 13,
**caractérisé** en ce que,
dans un premier temps, les couches de carcasse, couches en acier notamment, qui se croisent, sont placées sur un tambour cylindrique de montage, en ce qu'ensuite la ou les bandes individuelles associées au secteur de la couronne sont mises en place sur le secteur de la carcasse et qu'après, un bombage correspondant au tracé du contour de moule associé est entrepris et en ce que, ce n'est qu'ensuite, que les bandes individuelles du bandage ou des bandages associées aux secteurs d'épaulement sont mises en place.
